(19)

**Europäisches Patentamt**

**European Patent Office**

**Office européen des brevets**

(11) **EP 1 833 240 A2**

(12) **EUROPÄISCHE PATENTANMELDUNG**

(43) Veröffentlichungstag:
**12.09.2007  Patentblatt 2007/37**

(51) Int Cl.:
***H04N 5/14*** *(2006.01)*

(21) Anmeldenummer: **07103886.3**

(22) Anmeldetag: **09.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **09.03.2006  DE 102006012127**
**09.08.2006  DE 102006038266**

(71) Anmelder: **DResearch Digital Media Systems GmbH**
**10319 Berlin (DE)**

(72) Erfinder: **Weber, Michael, Dr.**
**Berlin 12683 (DE)**

(74) Vertreter: **Gulde, Klaus W. et al**
**Anwaltskanzlei**
**Gulde, Hengelhaupt, Ziebig & Schneider**
**Wallstrasse 58/59**
**10179 Berlin (DE)**

(54) **Verfahren und Anordnung zur Ermittlung des ersten Auftretens eines oder mehrerer dauerhafter Signale sowie entsprechendes Computerprogramm und entsprechendes computerlesbares Speichermedium**

(57)  Die Erfindung betrifft ein Verfahren und eine Anordnung zur Ermittlung des ersten Auftretens eines oder mehrerer dauerhafter Signale sowie ein entsprechendes Computerprogramm und ein entsprechendes computerlesbares Speichermedium, welche insbesondere einsetzbar sind, um Langzeitaufzeichnungen von Daten auszuwerten.

Dabei ist vorgesehen, dass die Ermittlung eine Intervallschachtelung der zeitlich geordneten aufgezeichneten Daten umfasst.

Fig. 1

EP 1 833 240 A2

**Beschreibung**

Die Erfindung betrifft ein Verfahren und eine Anordnung zur Ermittlung des ersten Auftretens eines oder mehrerer dauerhafter Signale sowie ein entsprechendes Computerprogramm und ein entsprechendes computerlesbares Speichermedium, welche insbesondere einsetzbar sind, um Langzeitaufzeichnungen von Daten auszuwerten.

Bei der Auswertung von Langzeitaufzeichnungen von Daten (Zeitreihen von Parameter- oder Messwerten, Signalverläufen, Audioaufzeichnungen, Videoaufzeichnungen usw.) ist häufig der Zeitpunkt von Interesse, an dem eine dauerhafte Veränderung der Situation eingetreten ist.

Herkömmlicherweise erfolgt die Suche nach einem solchen Zeitpunkt in der Regel manuell und ist sehr zeitaufwendig. Bei Langzeitaufzeichnungen kann sich eine solche Suche oft über viele Stunden bis Tage erstrecken.

Das verursacht zum einen Kosten und birgt darüber hinaus die Gefahr, durch nachlassende Konzentration relevante Informationen zu übersehen, und kann die Einleitung notwendiger Reaktionen erheblich verzögern.

Die Aufgabe der vorliegenden Erfindung besteht somit darin, ein Verfahren und eine Anordnung zur Ermittlung des ersten Auftretens eines oder mehrerer dauerhafter Signale sowie ein entsprechendes Computerprogramm und ein entsprechendes computerlesbares Speichermedium bereitzustellen, welche diese Nachteile vermeiden und insbesondere die Zeit für das Auffinden eines solchen Merkmals erheblich verkürzen.

Diese Aufgabe wird erfindungsgemäß durch die Merkmale in den Ansprüchen 1, 11, 12 und 13 gelöst. Zweckmäßige Ausgestaltungen der Erfindung sind in den Unteransprüchen enthalten.

Das erfindungsgemäße Verfahren zur Ermittlung des ersten Auftretens eines oder mehrerer dauerhafter Merkmale innerhalb von über einen Zeitraum aufgezeichneten Daten bietet den Vorteil, dass es sich besonders effizient ausführen lässt. Durch die Datenaufzeichnung über einen bestimmten Zeitraum werden die Daten automatisch zeitlich geordnet. Sie sind daher jeweils einem bestimmten Zeitpunkt zugeordnet. Sie können darüber hinaus noch mit einem Zeitindex versehen werden, durch welchen den Daten ein absoluter Zeitwert zugeordnet wird. Die Steigerung der Effizienz bei der Ermittlung des ersten Auftretens von gesuchten Merkmalen wird dadurch erreicht, dass die erfindungsgemäße Ermittlung des ersten Auftretens eines dauerhaften Merkmals eine Intervallschachtelung der zeitlich geordneten aufgezeichneten Daten umfasst. Hierbei werden die auszuwertenden Daten in einer vorgebbaren zeitlichen Reihenfolge nacheinander ausgewertet. Die zeitliche Reihenfolge wird dabei vorgegeben, indem die auszuwertenden Daten so geordnet werden, indem die ihnen zugeordneten Zeiten bzw. Zeitindizes mit Hilfe der Intervallschachtelung des für die Auswertung vorgesehenen Zeitintervalls bestimmt werden. Das Verfahren wird abgebrochen in Abhängigkeit der Länge der durch die Intervallschachtelung erzeugten Intervalle. Die Erfindung nutzt dabei aus, dass jede derartige, auf die Ermittlung des ersten Auftretens eines dauerhaften Merkmals gerichtete Auswertung aus einer Folge von Positionierungs- und Bewertungsschritten besteht, und dass man aus einer optimierten Strategie für die Positionierungsschritte wesentliche Effizienzvorteile erzielen kann. Die Positionierung erfolgt dabei derart, dass schrittweise auf solche Daten zugegriffen wird, die zu einem Zeitpunkt gehören, der durch die Intervallschachtelung bestimmt wurde, oder deren Zeitindex durch die Intervallschachtelung bestimmt wurde. Der Ablauf der Intervallschachtelung hängt von den Bewertungsergebnissen in den einzelnen Bewertungsschritten ab. In Abhängigkeit der Bewertung erfolgt die Positionierung vorzugsweise automatisch. Die konkrete Strategie für die Positionierungsschritte wird dabei vorzugsweise in Abhängigkeit von der jeweiligen Anwendung gewählt. Das Verfahren wird weiter unten in größerem Detail erläutert.

In jedem Fall wird bei dem erfindungsgemäßen Verfahren nach jedem Positionierungsschritt anhand der an der Position vorgefundenen Daten entschieden, ob das interessierende Merkmal, zum Beispiel ein Graffiti, bereits vorhanden ist (+) oder noch nicht vorhanden ist (-). In Abhängigkeit von diesem Ergebnis wird die nächste Position berechnet. Positionierungsschritt bedeutet hierbei beispielsweise die Auswahl bzw. den Zugriff auf zum Zeitpunkt t aufgezeichnete Daten $a_t$, und Position kann beispielsweise der Zeitpunkt t sein.

In den meisten Fällen stellt eine binäre Suche, wie ein Intervall-Schachtelungsverfahren, eine optimale Lösung dar.

In einer bevorzugten Ausführungsform des erfindungsgemäßen Verfahrens wird die Intervallschachtelung derart ausgeführt, dass ein Ausgangszeitintervall $I_1 = [t_{u1}, t_{o1}]$ vorgegeben wird, wobei für die Intervallgrenzen gilt: $t_{u1} < t_{o1}$. Des Weiteren weisen die Daten $a_{tu1}$ zum Zeitpunkt der unteren Intervallgrenze $t_{u1}$ das zu ermittelnde dauerhafte Merkmal nicht, die Daten $a_{to1}$ zum Zeitpunkt der oberen Intervallgrenze $t_{o1}$ das Merkmal jedoch sehr wohl auf. Nach der Vorgabe des Ausgangszeitintervalls $I_1$ werden aus diesem Ausgangszeitintervall $I_1$ so lange Teilintervalle ausgewählt, bis ein vorgebbares Abbruchkriterium erfüllt ist. Dabei wird aus jedem aktuell vorliegenden Teilintervall $I_i$ ein neues Teilintervall $I_{i+1} = [t_{ui+1}, t_{oi+1}] \subset I_i$ (i=1, 2, ..., n) ausgewählt, wobei auch hier für die Intervallgrenzen gilt: $t_{ui+1} < t_{oi+1}$. Außerdem müssen die Daten $a_{toi+1}$ zum Zeitpunkt der oberen Intervallgrenze $t_{oi+1}$ das Merkmal aufweisen, die Daten $a_{tui+1}$ des Zeitpunkts $t_{ui+1}$ der unteren Intervallgrenze jedoch nicht.

Eine andere bevorzugte spezielle Ausführungsform des erfindungsgemäßen Verfahrens sieht vor, dass zur Festlegung des neuen Teilintervalls $I_{i+1} = [t_{ui+1}, t_{oi+1}]$ das Ausgangsintervall $I_i = [t_{ui}, t_{oi}]$ halbiert wird und die Grenzen des neuen Intervalls $I_{i+1}$ wie folgt festgelegt werden: $t_{ui+1} = t_{ui}$ und $t_{oi+1} = (t_{ui}+t_{oi})/2$, falls die Daten $a_{(t_{ui}+t_{oi})/2}$ des Zeitpunkts $(t_{ui}+t_{oi})/2$ das Merkmal aufweisen oder $t_{ui+1} = (t_{ui}+t_{oi})/2$ und $t_{oi+1} = t_{oi}$, falls die Daten $a_{(tui+toi)/2}$ des Zeitpunkts $(t_{ui}+t_{oi})/2$

das Merkmal nicht aufweisen. Während bei der vorangehenden Ausführungsform in der Regel die beiden neuen Grenzen $t_{ui+1}$ und $t_{oi+1}$ dahingehend ausgewertet werden müssen, ob das gesuchte Ereignis vorliegt oder nicht, muss bei dieser speziellen Ausführungsform immer nur die Intervallmitte $(t_{ui}+t_{oi})/2$ beurteilt werden.

Das erfindungsgemäße Verfahren wird besonders vorteilhaft eingesetzt, wenn es sich bei den aufgezeichneten Daten um Langzeitaufzeichnungen von Daten handelt. Es kann sich insbesondere bei den aufgezeichneten Daten um eine Anzahl von sequentiell aufgezeichneten (analogen oder digitalen) Datensätzen oder um kontinuierlich aufgezeichnete (analoge oder digitale) Daten handeln.

Bei derartigen Daten kann es sich beispielsweise um

- Parameter- oder Messwerte,
- Signalverläufe,
- Audio-Aufzeichnungen oder
- Videoaufzeichnungen

handeln, bei dem zu ermittelnden Merkmal beispielsweise um

- einen plötzlichen Anstieg einer Temperatur an einem Messpunkt,
- ein Einsetzen eines fortdauernden akustischen Signals und/oder
- eine dauerhafte Veränderung in einer Video-überwachten Szene.

In Abhängigkeit der Komplexität der zu bewertenden Daten und/oder des Merkmals wird in einer bevorzugten Ausführungsform der Erfindung das erste Auftreten von dauerhaften Merkmalen automatisch, rechnergestützt oder unterstützt durch Nutzereingriff ermittelt, das heißt, die Bewertung von Daten bzw. Datensätzen erfolgt auf diese Weise.

In einer weiteren bevorzugten Ausführungsform des erfindungsgemäßen Verfahrens ist vorgesehen, dass das Verfahren zur Ermittlung des ersten Auftretens eines dauerhaften Merkmals abgebrochen wird, wenn bei der Intervallschachtelung ein Intervall erzeugt wird, welches nur noch einen Datensatz umfasst. Diese Ausführungsform kann beispielsweise eingesetzt werden, wenn es sich bei den aufgezeichneten Daten um einzelne Datensätze handelt, die zu verschiedenen Zeitpunkten aufgezeichnet wurden, wie beispielsweise Videoaufzeichnungen oder andere Aufzeichnungen mit diskret aufgezeichneten Daten bzw. Datensätzen. Als alternatives Abbruchkriterium wird in einer anderen bevorzugten Ausführungsform die Intervalllänge vorgegeben. Dabei wird das Verfahren zur Ermittlung des ersten Auftretens eines dauerhaften Merkmals abgebrochen, wenn die Länge $L = |t_{oi}-t_{ui}|$ eines bei der Intervallschachtelung erzeugten Intervalls $I_i = [t_{ui}, t_{oi}]$ einen vorgegebenen Wert annimmt oder unterschreitet. Dieses Abbruchkriterium kann beispielsweise bei kontinuierlich aufgezeichneten Daten, wie beispielsweise analog aufgezeichneten Messreihen, eingesetzt werden.

Zur Ermittlung, ob Daten $a_t$ zum Zeitpunkt t das Merkmal enthalten, sind verschiedene Vorgehensweisen vorgesehen. Die Ermittlung kann beispielsweise automatisch, rechnergestützt oder durch Nutzereingriff erfolgen. Die jeweilige Art der Ermittlung hängt dabei von den aufgezeichneten Daten bzw. von dem interessierenden Merkmal ab. Eine vollautomatische Ermittlung des ersten Auftretens des zu beobachtenden Merkmals kann dabei beispielsweise bei der Auswertung von Zeitreihen von Parameter- oder Messwerten oder einfachen Signalverläufen zur Anwendung kommen, während beispielsweise Videoaufzeichnungen in einer komplexen Umgebung durch einen Nutzer des Verfahrens bewertet werden, dem dann jeweils die Daten (Videobilder) an der bzw. den Grenzen des jeweils aktuellen Intervalls angezeigt werden. Durch seine Entscheidung, ob das jeweilige Merkmal in dem angezeigten Datensatz enthalten ist oder nicht, welche er über Mittel zur Dateneingabe in eine Anordnung zur Durchführung eines Verfahrens zur Ermittlung des ersten Auftretens eines dauerhaften Merkmals eingibt, erfolgt die Bewertung des jeweiligen Datensatzes. Auf Basis dieser Eingabe/Bewertung wird durch die Anordnung das nächste Teilintervall festgelegt.

Es kann in Langzeitaufzeichnungen von Daten vorkommen, dass ein dauerhaftes Merkmal zwar über einen längeren Zeitraum vorhanden ist, aber nicht bis zum Ende der Datenaufzeichnung andauert. In einem solchen Falle muss vor Beginn des Intervallschachtelungsverfahrens ein geeignetes Ausgangsintervall, das heißt ein Intervall, an dessen unterer Grenze das Merkmal nicht vorhanden ist und an dessen oberer Grenze das Merkmal vorhanden ist, aufgefunden werden. In einer bevorzugten Ausführungsform des erfindungsgemäßen Verfahrens erfolgt die Ermittlung dieses Ausgangsintervalls derart, dass wenigstens ein Teil des Zeitraums, vorzugsweise des gesamten Zeitraums, für den Daten aufgezeichnet wurden, segmentiert wird. Hierfür wird eine Anzahl von Zeitpunkten aus dem Zeitraum der Datenaufzeichnung ausgewählt, wodurch der segmentierte Teil der Aufzeichnungszeit in eine Anzahl von Teilintervallen (Segmente) aufgeteilt wird. Die ausgewählten Zeitpunkte bilden dann jeweils die Grenzen der einzelnen Intervalle (Segmente). Die ausgewählten Zeitpunkte werden dahingehend bewertet, ob in den Daten $a_{ti}$ das interessierende Merkmal vorhanden ist oder nicht. Wird ein Zeitpunkt ermittelt, dessen zugehörige Daten das Merkmal aufweisen, so kann die Suche abgebrochen und dieser Zeitpunkt $t_k$ als obere Grenze des vorzugebenden Ausgangsintervalls definiert werden.

In einer bevorzugten Ausführungsform des erfindungsgemäßen Verfahrens wird der Zeitpunkt des Beginns der Datenaufzeichnung als untere Intervallgrenze angenommen, da hier das gesuchte Merkmal naturgemäß noch nicht vorhanden ist. Zur weiteren Beschleunigung des Verfahrens kann als untere Intervallgrenze des Ausgangszeitintervalls natürlich jeder andere Zeitpunkt der Datenaufzeichnung gewählt werden, in dem das gesuchte Merkmal noch nicht vorhanden war und der näher an dem ermittelten Zeitpunkt liegt, dessen Daten das Merkmal aufweisen.

Eine andere bevorzugte Ausführungsform des erfindungsgemäßen Verfahrens sieht vor, dass die Bewertung der ausgewählten Segmentgrenzen in aufsteigender zeitlicher Reihenfolge erfolgt und/oder dass der Zeitraum der Datenaufzeichnung bzw. der segmentierte Teil des Aufzeichnungszeitraums in äquidistante Abschnitte aufgeteilt wird.

Durch die Bewertung der zu den Segmentgrenzen gehörenden Daten in aufsteigender zeitlicher Reihenfolge kann das Ausgangszeitintervall optimal ausgewählt werden, indem man den Zeitpunkt $t_k$, an dem Daten gefunden wurden, welche das Merkmal enthalten, als obere Grenze des Ausgangszeitintervalls annimmt und den diesem vorangehenden $t_{k-1}$ als untere Grenze des Ausgangszeitintervalls annimmt.

Eine Anordnung nach der Erfindung weist mindestens einen Chip und/oder Prozessor auf, uns ist derart eingerichtet, dass ein Verfahren zur Ermittlung des ersten Auftretens eines oder mehrerer dauerhafter Merkmale innerhalb von über einen Zeitraum aufgezeichneten Daten ausführbar ist, wobei die aufgezeichneten Daten zeitlich geordnet sind und zur Ermittlung des ersten Auftretens dauerhafter Merkmale die aufgezeichneten Daten in einer vorgebbaren zeitlichen Reihenfolge nacheinander ausgewertet werden, und die zeitliche Reihenfolge der auszuwertenden Daten durch Ausführung einer Intervallschachtelung ermittelt wird.

Ein Computerprogramm zur Ermittlung des ersten Auftretens eines oder mehrerer dauerhafter Merkmale ermöglicht es einer Datenverarbeitungseinrichtung, nachdem es in den Speicher der Datenverarbeitungseinrichtung geladen worden ist, ein Verfahren zur Ermittlung des ersten Auftretens eines oder mehrerer dauerhafter Merkmale innerhalb von über einen Zeitraum aufgezeichneten Daten durchzuführen, wobei die aufgezeichneten Daten zeitlich geordnet sind und zur Ermittlung des ersten Auftretens dauerhafter Merkmale die aufgezeichneten Daten in einer vorgebbaren zeitlichen Reihenfolge nacheinander ausgewertet werden, und die zeitliche Reihenfolge der auszuwertenden Daten durch Ausführung einer Intervallschachtelung ermittelt wird.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 12 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zur Ermittlung des ersten Auftretens eines oder mehrerer dauerhafter Merkmale durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zur Ermittlung des ersten Auftretens eines oder mehrerer dauerhafter Merkmale innerhalb von über einen Zeitraum aufgezeichneten Daten durchzuführen, wobei die aufgezeichneten Daten zeitlich geordnet sind und zur Ermittlung des ersten Auftretens dauerhafter Merkmale die aufgezeichneten Daten in einer vorgebbaren zeitlichen Reihenfolge nacheinander ausgewertet werden, und die zeitliche Reihenfolge der auszuwertenden Daten durch Ausführung einer Intervallschachtelung ermittelt wird.

Die Erfindung wird nachfolgend unter Bezugnahme auf die Figuren der Zeichnungen an einem Ausführungsbeispiel näher erläutert. Es zeigen:

Figur 1      eine Zeitskala mit einem die Szene verändernden Ereignis (illustriert durch den Farbwechsel) und eine Folge von Positionierungen im Rahmen einer erfindungsgemäßen Suchstrategie;

Figur 2      eine beispielhafte Wiedergabe von Bedienelementen einer beispielhaften Anordnung zur Ausführung des erfindungsgemäßen Verfahrens und

Figur 3      eine Veranschaulichung der Ermittlung des Ausgangsintervalls bei der Lokalisierung von Ereignissen, die eine zeitweilige Veränderung der Situation bewirken.

In der beispielhaften Ausführungsform des erfindungsgemäßen Verfahrens zum Auffinden des ersten Auftretens von dauerhaften Merkmalen innerhalb von Datenaufzeichnungen werden die Daten sequentiell aufgezeichnet. Die sequentielle Aufzeichnung der Daten lässt sich über eine zeitliche Indizierung der Daten bzw. Datensätze auf einer Zeitachse abbilden. Die das interessierende Merkmal enthaltenden Daten treten zu einem bestimmten Zeitpunkt erstmalig auf und bestehen dann über einen längeren Zeitraum hinweg, gegebenenfalls bis zum Ende der Aufzeichnung fort.

Diese sequentiell aufgezeichneten Datensätze werden nun ausgewertet, um den Zeitpunkt des ersten Auftretens des gesuchten Merkmals zu bestimmen.

Jede derartige Auswertung besteht aus einer Folge von Positionierungs- und Bewertungsschritten. Aus einer optimierten Strategie für die Positionierungsschritte kann man wesentliche Effizienz-Vorteile ziehen. Welche konkrete Strategie sich für die Positionierungsschritte anbietet, hängt von der jeweiligen Anwendung ab.

In jedem Fall wird bei diesem Verfahren nach jedem Positionierungsschritt anhand der an der Position vorgefundenen Daten entschieden, ob das interessierende Merkmal (z. B. Graffiti) bereits vorhanden ist (+) oder noch nicht vorhanden ist (-). Von diesem Ergebnis abhängig wird erfindungsgemäß die nächste Position berechnet.

In den meisten Fällen stellt eine binäre Suche (Intervall-Schachtelungsverfahren) eine optimale Lösung dar, die im nachfolgenden Ausführungsbeispiel näher erläutert werden soll.

Bei dem beispielhaften Intervall-Schachtelungsverfahren wird eine Folge von Zeitintervallen berechnet, die sämtliche das gesuchte Ereignis enthalten, wobei das jeweils neu berechnete Intervall die halbe Länge des vorangehenden Zeitintervalls hat, so dass nach sehr wenigen Iterationen das aktuelle Intervall mit dem relevanten Ereignis zusammenfällt (das heißt nur noch den an das Ereignis geknüpften Datensatz enthält).

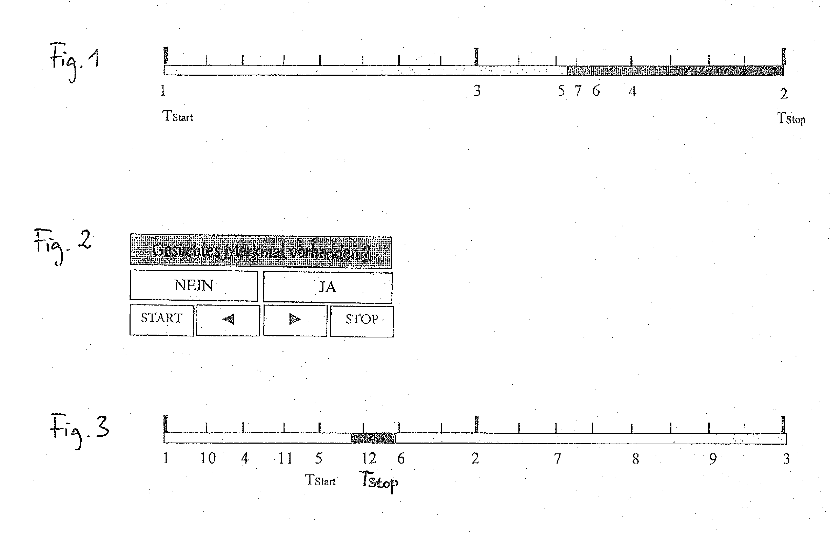

Nachfolgend wird der Positionierungsalgorithmus am Beispiel von Figur 1 beschrieben.

Dabei werden folgende Bezeichnungen eingeführt:

$$\underline{\text{U}}\text{ntere Grenze des aktuellen Intervalls:} \qquad T_U$$
$$\underline{\text{O}}\text{bere Grenze des aktuellen Intervalls:} \qquad T_O$$
$$\text{Aktuelle } \underline{\text{T}}\text{estposition (= Bewertungsposition):} \qquad T_T$$

Der Algorithmus der Intervallschachtelung beginnt in der beispielhaften Ausführungsform mit einem Intervall I = [$T_{START}$, $T_{STOP}$], welches den gesamten Aufzeichnungszeitraum umfasst.

Beginn:

(1)  $T_U :=$  $T_{START}$  Startzeitpunkt der Aufzeichnung  Position 1
(2)  $T_O :=$  $T_{STOP}$  Endzeitpunkt der Aufzeichnung  Position 2
(3)  $T_T :=$  $T_U + (T_O - T_U)/2$  Mitte des aktuellen Intervalls

In dem in der Figur 1 dargestellten Beispiel wäre die Testposition $T_T$ im ersten Durchlauf die Position 3, im zweiten Durchlauf die Position 4, im dritten Durchlauf die Position 5, im vierten Durchlauf die Position 6 und im fünften Durchlauf die Position 7.

Wenn das gesuchte Ereignis (Farbübergang in der Figur, d.h. das erste Auftreten des Merkmals) in den Daten der aktuellen Position $T_T$ festgestellt wird, wird der Algorithmus der Intervallschachtelung abgebrochen, da der Zeitpunkt des ersten Auftretens des Merkmals gefunden wurde.

Andernfalls wird die Suche wie folgt fortgesetzt:
wenn das Merkmal an der aktuellen Position $T_T$ vorhanden ist, dann

(4)  $T_O :=$  $T_T$  da das gesuchte Ereignis vor $T_T$ liegen muss.

(In dem in Figur 1 gezeigten Ausführungsbeispiel ist das im zweiten Durchlauf (Position 4) und im vierten Durchlauf (Position 6) der Fall.)

Sonst, d.h., wenn das Merkmal an der aktuellen Position $T_T$ nicht vorhanden ist,

(5)  $T_U :=$  $T_T$  da das gesuchte Ereignis nach $T_T$ liegen muss.

(In dem in Figur 1 gezeigten Ausführungsbeispiel ist das im ersten Durchlauf (Position 3), im dritten Durchlauf (Position 5) und im fünften Durchlauf (Position 7) der Fall.)

Nach jeder gemäß Schritt (4) bzw. (5) vorgenommenen Festlegung der neuen Intervallgrenzen wird die neue Testposition gemäß Schritt (3) festgelegt.

Die erfindungsgemäße Lösung besteht darin, die Positionierungsschritte nach dem soeben dargestellten (oder gegebenenfalls nach einem anderen effektiven) Verfahren automatisch auszuführen und die Bewertung - je nach Komplexität - ebenfalls automatisch, rechnergestützt oder durch Auswertepersonal ausführen zu lassen.

Durch die Lösung wird sichergestellt, dass die Positionierungsstrategie optimal ist und zu ihrer Umsetzung keine zeitraubenden Folgen manueller Bedienaktionen erforderlich sind, da ohne menschliche Interaktion automatisch der gemäß Suchstrategie nächste zu bewertende Datensatz angeboten wird.

Der Effekt lässt sich an folgendem Beispiel demonstrieren:

Die Inspektion einer 72-Stunden-Videoaufzeichnung mit vierfacher Abspielgeschwindigkeit unter der Annahme, dass das relevante Ereignis im Mittel nach Auswertung der Hälfte der Aufzeichnung gefunden wird, würde 9 Stunden reine Auswertezeit erfordern.

Unter der Annahme, dass pro Sekunde 8 Bilder aufgezeichnet wurden, würde die Gesamtaufzeichnung 2.073.600 (72*3.600*8) Bilder umfassen. Um das interessierende Ereignis bildgenau zu lokalisieren, wären nach dem vorgeschlagenen Verfahren $Log_2$ 2.073.600 = 21 Entscheidungen zu treffen, ob die Veränderung der Szene im jeweils angebotenen Bild bereits eingetreten ist oder nicht. Nimmt man an, dass jede Entscheidung ca. 3 Sekunden erfordert, so wäre die Suche nach ca. einer Minute abgeschlossen.

Abhängig vom Charakter der jeweils auszuwertenden Daten sind in verschiedenen beispielhaften Ausführungsformen der Erfindung folgende Verfeinerungen des Verfahrens vorgesehen:

- Im Falle von Video-Aufzeichnungen kann der interessierende Bereich (in dem die relevante Änderung stattgefunden hat) zur Führung des Auges geeignet markiert werden, beispielsweise durch eine umschließende Kontur, eine farbliche Markierung oder dergleichen.
- Wenn anhand des nach einem Positionierungsschritt automatisch zur Bewertung angebotenen Datensatzes eine Bewertung nicht oder nicht mit hinreichender Sicherheit erfolgen kann, besteht die Möglichkeit, manuell unmittelbar vorangehende oder nachfolgende Datensätze anzusteuern (z. B. weil im Falle einer Video-Aufzeichnung der interessierende Bereich zeitweise verdeckt ist, so dass aufgrund des zunächst angebotenen Datensatzes keine Bewertung getroffen werden kann).

Die grundsätzliche Bedienung erfolgt in einer beispielhaften Ausführungsform über folgende, in Figur 2 gezeigte Bedienelemente (Buttons):

Die Suche besteht in diesem Falle aus folgenden Bedienschritten, wobei die in Klammern notierten Such-Schritte "◄ / ►" optional (und bei Bedarf auch mehrfach) erfolgen:

START →(◄/►)→ JA/NEIN→ ... → (◄ / ►) → JA/NEIN → (→ STOP),

gegebenenfalls erst feinpositionieren, dann entscheiden.

Nach Betätigung des Buttons START wird einem Bediener der Datensatz für den ersten zu bewertenden Zeitpunkt angeboten. Hierfür kann z.B. das zu dem Zeitpunkt gehörige Bild einer Videosequenz auf einem Monitor dargestellt werden, ggf. mit einer Markierung besonders wichtiger Regionen. Der erste zu bewertende Zeitpunkt kann das Ende des Aufzeichnungszeitraumes sein (am Beginn ist das Merkmal per definitionem nicht vorhanden). Wenn bereits feststeht, dass das gesuchte Merkmal am Ende des Aufzeichnungszeitraumes vorhanden war, kann am Start des Verfahrens auch der Datensatz, welcher zur ersten Testposition $T_T$ gehört, zur Bewertung angeboten werden. Bei den so bewerteten Daten kann es sich beispielsweise um Videoaufzeichnungen handeln.

Der angebotene Datensatz wird dann von dem Bediener daraufhin bewertet, ob das gesuchte Merkmal in diesem Datensatz auftritt (Button JA) oder nicht (Button NEIN).

Die JA/NEIN-Entscheidung wird also jeweils im Ergebnis der Bewertung des präsentierten Datensatzes (z. B. eines Videobildes) getroffen. In Abhängigkeit von dieser Entscheidung wird durch das System automatisch nach einem der erfindungsgemäßen Verfahren der neue zu bewertende Datensatz ermittelt und ausgegeben.

Das Verfahren endet, wenn die Suche durch STOP abgebrochen wird oder automatisch, wenn das aktuelle Suchintervall nur noch einen Datensatz enthält.

Kann der ausgegebene Datensatz durch den Bediener nicht oder nur unzureichend bewertet werden, kann der Bediener mit Hilfe der Pfeil-Button **"◄ / ►"** den vor oder nach dem angebotenen Datensatz liegenden Datensatz ausgeben lassen, um diesen zu bewerten. Dieser Schritt kann bei Bedarf so lange ausgeführt werden, bis ein Datensatz ausgegeben wird, dessen Bewertung möglich ist.

Neben der Situation, dass ein Ereignis (Merkmal) eintritt, welches zu einer dauerhaften Veränderung der im Aufzeichnungszeitraum dokumentierten Situation führt, kann auch der Fall eintreten, dass die Veränderung nur über einen gewissen Zeitraum, nicht jedoch bis zum Ende des Aufzeichnungszeitraumes besteht.

Abweichend von der oben beschriebenen Problematik kann es somit sein, dass ein Ereignis eine Veränderung in der Szene bewirkt, die nur für eine begrenzte Zeit wirksam ist; also nicht nach dem Ereignis ständig - das heißt über die gesamte restliche Aufzeichnungsdauer - wirksam ist.

Ähnlich wie im oben beschriebenen Verfahren wird auch hier eine wesentliche Effizienzsteigerung der Suche durch eine optimierte Positionierungsstrategie erreicht. Diese Strategie muss allerdings an die veränderte Problemlage angepasst werden und gliedert sich in zwei Phasen:

1. Phase: Auffinden eines Zeitpunktes (einer Positionierung) in der Aufzeichnung, zu dem die interessierende Veränderung besteht (im vorangehend beschriebenen Verfahren hatte das Ende der Aufzeichnung stets diese Eigenschaft).

2. Phase: Auffinden des Zeitpunktes, an dem der Übergang bezüglich des interessierenden Merkmals erfolgt.

In der 2. Phase kommt das oben beschriebene Verfahren (der binären Suche) zur Anwendung.

In der 1. Phase wird eine äquidistante Segmentierung der gesamten oder eines Teils der Aufzeichnungsdauer berechnet und es erfolgt nacheinander eine Positionierung auf alle Segmentgrenzen dieser Segmentierung. Für all diese Positionen wird eine Bewertung (wie im oben beschriebenen Verfahren) vorgenommen. Wird dabei die relevante Situation vorgefunden, so wird Phase 1 abgebrochen und automatisch nach dem binären Suchverfahren fortgefahren, ansonsten wird die Segmentierung verfeinert, indem in einer beispielhaften Ausführungsform jedes Segment halbiert wird, und nach dem gleichen Schema fortgefahren.

In Figur 3 ist die Durchführung der 1. Phase veranschaulicht. Als erste Segmentierung wurde dabei eine Halbierung des Ausgangsintervalls durchgeführt. Die dabei entstehenden Grenzen Position 1, Position 2 und Position 3 enthielten alle das Merkmal nicht, so dass die Segmentierung in einem nachfolgenden Schritt verändert wurde. Auch bei dieser neuen Segmentierung entstanden keine Intervallgrenzen, denen Datensätze zugeordnet sind, welche das gesuchte Merkmal aufweisen. Erst die vierte Segmentierung umfasste eine solche Segmentgrenze (Position 12).

Daher wurde als Ausgangszeitintervall für das erfindungsgemäße Intervallschachtelungsverfahren nach Phase 2 das Intervall zwischen Position 5 und Position 12 vorgegeben. Auf diesem Intervall erfolgt nun die Ermittlung des ersten Auftretens des über einen gewissen Zeitraum andauernden Merkmals.

**Patentansprüche**

1. Verfahren zur Ermittlung des ersten Auftretens eines oder mehrerer dauerhafter Merkmale innerhalb von über einen Zeitraum aufgezeichneten Daten, wobei die aufgezeichneten Daten zeitlich geordnet sind,
zur Ermittlung des ersten Auftretens dauerhafter Merkmale die aufgezeichneten Daten in einer vorgebbaren zeitlichen Reihenfolge nacheinander ausgewertet werden, und die zeitliche Reihenfolge der auszuwertenden Daten durch Ausführung einer Intervallschachtelung ermittelt wird.

2. Verfahren nach Anspruch 1,
**dadurch gekennzeichnet, dass**
die Intervallschachtelung derart ausgeführt wird:
Vorgabe eines Ausgangszeitintervalls $I_1 = [t_{u1}, t_{o1}]$, wobei

$$t_{u1} < t_{o1},$$

Daten $a_{tu1}$ des Zeitpunkts $t_{u1}$ das Merkmal nicht aufweisen und
Daten $a_{to1}$ des Zeitpunkts $t_{o1}$ das Merkmal aufweisen,

Ausführen des folgenden Schritts so lange, bis ein vorgebbares Abbruchkriterium erfüllt ist:
Auswahl eines Teilintervalls $I_{i+1} = [t_{ui+1}, t_{oi+1}] \subset I_i$ (i=1, 2, ..., n) von $I_i$, wobei

$$t_{ui+1} < t_{oi+1},$$

Daten $a_{tui+1}$ des Zeitpunkts $t_{ui+1}$ das Merkmal nicht aufweisen und
Daten $a_{toi+1}$ des Zeitpunkts $t_{oi+1}$ das Merkmal aufweisen.

3. Verfahren nach Anspruch 2,
**dadurch gekennzeichnet, dass**
die Auswahl des Teilintervalls $I_{i+1} = [t_{ui+1}, t_{oi+1}]$ durch Halbierung des Ausgangsintervalls $I_i = [t_{ui}, t_{oi}]$ und Festlegung der neuen Intervallgrenzen wie folgt erfolgt:

$t_{ui+1} = t_{ui}$ und $t_{oi+1} = (t_{ui}+t_{oi})/2$, falls die Daten $a_{(tui+toi)/2}$ des Zeitpunkts $(t_{ui}+t_{oi})/2$ das Merkmal aufweisen oder
$t_{ui+1} = (t_{ui}+t_{oi})/2$ und $t_{oi+1} = t_{oi}$, falls die Daten $a_{(tui+toi)/2}$ des Zeitpunkts $(t_{ui}+t_{oi})/2$ das Merkmal nicht aufweisen.

4. Verfahren nach einem der voranstehenden Ansprüche,
**dadurch gekennzeichnet, dass**
es sich bei den aufgezeichneten Daten um eine Anzahl von sequentiell aufgezeichneten Datensätzen oder um kontinuierlich aufgezeichnete Daten handelt.

**5.** Verfahren nach Anspruch 2 bis 4,
**dadurch gekennzeichnet, dass**
das Verfahren zur Ermittlung des ersten Auftretens eines dauerhaften Merkmals abgebrochen wird,
wenn bei der Intervallschachtelung ein Intervall erzeugt wird, welches nur noch einen Datensatz umfasst oder
wenn die Länge $L = |t_{oi}-t_{ui}|$ eines bei der Intervallschachtelung erzeugten Intervalls $l_i = [t_{ui}, t_{oi}]$ einen vorgegebenen Wert annimmt oder unterschreitet.

**6.** Verfahren nach einem der voranstehenden Ansprüche,
**dadurch gekennzeichnet, dass**
die Ermittlung, ob ein dauerhaftes Merkmal aufgetreten ist,

- automatisch,
- rechnergestützt oder
- durch Nutzereingriff

erfolgt.

**7.** Verfahren nach einem der Ansprüche 2 bis 6,
**dadurch gekennzeichnet, dass**
das Ausgangsintervall der Intervallschachtelung ermittelt wird, indem
eine Segmentierung wenigstens eines Teils des Zeitraums, in dem Daten erfasst wurden, vorgenommen wird,
die Segmentgrenzen bewertet werden, ob das Merkmal vorhanden ist, und
wenn eine Segmentgrenze, wo das Merkmal vorhanden ist, gefunden wurde, ein Intervall mit der Segmentgrenze, wo das Merkmal vorhanden ist, als obere Grenze vorgegeben wird.

**8.** Verfahren nach Anspruch 7,
**dadurch gekennzeichnet, dass**
in dem Falle, dass bei erster Segmentierung keine Segmentgrenze, wo das Merkmal vorhanden ist, gefunden wird, die Segmentierung verfeinert und ein Verfahren nach Anspruch 7 oder 8 wiederholt wird.

**9.** Verfahren nach einem der voranstehenden Ansprüche,
**dadurch gekennzeichnet, dass**
im Falle von aufgezeichneten visuellen Daten ein interessierender Bereich markiert wird.

**10.** Verfahren nach einem der voranstehenden Ansprüche,
**dadurch gekennzeichnet, dass**
vorangehende oder nachfolgende Datensätze ausgewertet werden, falls eine Bewertung eines angebotenen Datensatzes nicht oder nicht mit hinreichender Sicherheit durchgeführt werden kann.

**11.** Anordnung mit mindestens einem Chip und/oder Prozessor, wobei die Anordnung derart eingerichtet ist, dass ein Verfahren zur Ermittlung des ersten Auftretens eines oder mehrerer dauerhafter Merkmale innerhalb von über einen Zeitraum aufgezeichneten Daten ausführbar ist, wobei die aufgezeichneten Daten zeitlich geordnet sind,
zur Ermittlung des ersten Auftretens dauerhafter Merkmale die aufgezeichneten Daten in einer vorgebbaren zeitlichen Reihenfolge nacheinander ausgewertet werden, und die zeitliche Reihenfolge der auszuwertenden Daten durch Ausführung einer Intervallschachtelung ermittelt wird.

**12.** Computerprogramm, das es einer Datenverarbeitungseinrichtung ermöglicht, nachdem es in Speichermittel der Datenverarbeitungseinrichtung geladen worden ist, ein Verfahren zur Ermittlung des ersten Auftretens eines oder mehrerer dauerhafter Merkmale innerhalb von über einen Zeitraum aufgezeichneten Daten durchzuführen, wobei die aufgezeichneten Daten zeitlich geordnet sind,
zur Ermittlung des ersten Auftretens dauerhafter Merkmale die aufgezeichneten Daten in einer vorgebbaren zeitlichen Reihenfolge nacheinander ausgewertet werden, und die zeitliche Reihenfolge der auszuwertenden Daten durch Ausführung einer Intervallschachtelung ermittelt wird.

**13.** Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Ermittlung des ersten Auftretens eines oder mehrerer dauerhafter Merkmale innerhalb von über einen Zeitraum aufgezeichneten Daten durchzuführen, wobei die aufgezeichneten Daten zeitlich geordnet sind, zur Ermittlung des ersten Auftretens dauerhafter Merkmale die aufgezeichneten Daten in einer vorgebbaren zeitlichen Reihenfolge nacheinander ausgewertet werden, und die zeitliche Reihenfolge der auszuwertenden Daten durch Ausführung einer Intervallschachtelung ermittelt wird.

14. Verfahren, bei dem ein Computerprogramm nach Anspruch 12 aus einem elektronischen Datennetz, wie beispielsweise aus dem Internet, auf eine an das Datennetz angeschlossene Datenverarbeitungseinrichtung heruntergeladen wird.

Fig. 1

1          3     5 7 6   4       2

$T_{Start}$                              $T_{Stop}$

Fig. 2

Gesuchtes Merkmal vorhanden ?

| NEIN | | | JA |
| START | ◄ | ► | STOP |

Fig. 3

1   10   4   11   5   12   6     2     7     8     9     3

$T_{Start}$   $T_{Stop}$